# EUROPEAN PATENT APPLICATION

(11) **EP 2 023 584 A1**
(43) Date of publication of application: **11.02.2009**
(21) Application number: 07113498.5
(22) Date of filing: 31.07.2007
(51) Int. Cl.: H04M 1/725

(54) **Electronic device and method of controlling the electronic device**

(71) Applicant: Research In Motion Limited, Waterloo, Ontario N2L 3W8 (CA)
(72) Inventor: Tysowski, Piotr, Waterloo Ontario N2K 2R2 (CA)
(74) Representative: Dawson, Elizabeth Ann

(57) **Abstract**

A method of controlling an electronic device includes executing one of a calendar application and a message application and providing a respective one of a calendar user interface and a messaging user interface, receiving a view command from a user input of the electronic device in the one of the calendar user interface and the messaging user interface, the view command relating to a time period, executing the other of the calendar application and the message application in response to receipt of the view command, and displaying a respective one of a calendar application view and a message application view based on the time period.

## Description

The present application relates generally to electronic devices with a calendar application for storing and viewing calendar events and messaging applications for sending and receiving messages to and from other electronic devices.

Electronic devices have gained widespread use and can provide a variety of functions including calendar related functions as well as electronic messaging. Electronic devices can include several types of devices including desktop computers or mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Many portable electronic devices include a variety of applications for performing calendaring functions, email functions, telephone functions, short message service (SMS) functions, Web browser functions and address book functions. Calendar applications allow users to track and manage calendar events such as appointments and meetings and to set reminders for such appointments and meetings. These calendar events are saved and may be selectively manipulated and displayed to the user in various formats to view monthly, weekly or daily calendared events.

Message applications permit users to send and receive messages such as email messages. Such messages are stored in files such as an inbox folder or a sent folder. With the wide use of email as a communication tool both for personal and business purposes, it is common for electronic device users to send and receive several email messages in any given day. Thus, the inbox and sent folders in an electronic device are often populated with many, if not hundreds, of email messages. With such an extensive message list, it is often very difficult to search out and locate an email message when the exact subject or a key word cannot be remembered.

Selection of the calendar application for execution by the processor of the electronic device results in a calendar display showing calendar events. Such a display may be helpful in determining, for example, a date of receipt of an email message. With the recollection of a date or approximate date of a message, the user of the electronic device then exits the calendar application and executes the message application to look for the email message by searching through the list. Such a search method is cumbersome and improvements are desirable.

### GENERAL

According to one aspect there may be provided a method of controlling an electronic device including executing one of a calendar application and a message application and providing a respective one of a calendar user interface and a messaging user interface, receiving a view command from a user input of the electronic device in the one of the calendar user interface and the messaging user interface, the view command relating to a time period, executing the other of the calendar application and the message application in response to receipt of the view command, and displaying a respective one of a calendar application view and a message application view based on the time period.

According to another aspect, there may be provided a computer program product for controlling an electronic device. The computer program product may comprise a computer-readable medium having computer-readable code embodied therein for implementing in an electronic device the above method.

According to another aspect, there may be provided an electronic device having a calendar application and email capability. The electronic device may comprise a display device, a user input device, and a processor connected to the display device and the user input device. The processor may be operable to execute one of a calendar application and a message application and provide a respective one of a calendar user interface and a messaging user interface via the display device, to receive a view command from the user input device in the one of the calendar user interface and the messaging user interface, the view command relating to a time period, and to execute the other of the calendar application and the message application in response to receipt of the view command and to cause the display device to display a respective one of a calendar application view and a message application view based on the time period.

Thus, when the processor of the electronic device executes a calendar application, a user may be provided with an option to select an electronic message view command that relates to a calendar day or week displayed in the calendar user interface. The processor may then execute the electronic message application in response to receipt of the electronic message view command and displays a list of electronic messages sent and received during the calendar day or week displayed in the calendar user interface.

Similarly, when the processor of the electronic device executes an electronic message application, a user may be provided with an option to select a calendar view command that relates to a calendar time period during which an electronic message was sent or received, from the messaging user interface. The calendar application may be executed in response to receipt of the calendar view command and a calendar view is displayed that includes the time period.

The user may therefore be able to view email messages in relation to a calendar day or week displayed in a calendar user interface. Similarly, a user may be able to view a calendar day or week in relation to a date of an email message. Thus, a user may be able to efficiently switch between the applications to view pertinent information based on the selection of a day or week.

### BRIEF DESCRIPTION OF THE DRAWINGS

The electronic device and method of controlling the electronic device will be better understood with reference to the following description and to the Figures, in which:

Figure 1 is a representation of an electronic device in accordance with one embodiment;

Figure 2 is a block diagram of certain components, including internal components, of the electronic device of Figure 1;

Figure 3 is an exemplary screen shot of an LCD display of the electronic device of Figure 1;

Figure 4 is a simplified flowchart depicting a method of controlling the electronic device in accordance with one embodiment;

Figures 5 to 14 are exemplary screen shots of the LCD display of the electronic device of Figure 1;

Figure 15 is a simplified flowchart depicting a method of controlling the electronic device in accordance with another embodiment;

Figures 16 and 17 show exemplary screen shots of the LCD display of the electronic device of Figure 1; and

Figure 18 is a representation of an electronic device in accordance with another embodiment.

### DESCRIPTION OF PREFERRED EMBODIMENTS

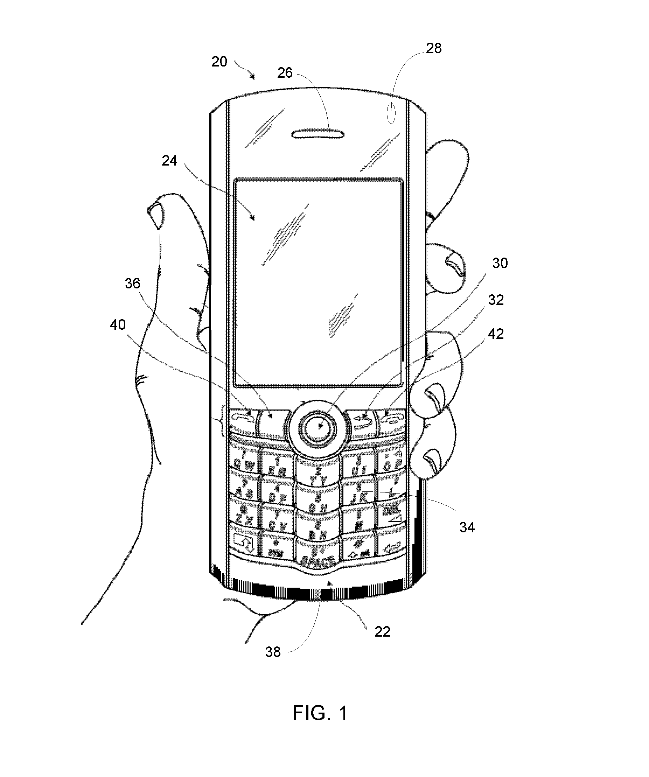

Referring to Figure 1, a portable electronic device in accordance with an embodiment is indicated generally by the numeral 20. In the present embodiment, the portable electronic device 20 is based on the computing environment and functionality of a hand-held wireless communication device. It will be understood, however, that the electronic device is not limited to the hand-held wireless communication device shown. Other electronic devices are possible, such as cellular telephones, smart telephones, and laptop computers. Referring again to the present embodiment, the portable electronic device 20 includes a housing 22 that frames an LCD display 24, a speaker 26, an LED indicator 28, a trackball 30, an exit key 32, a key pad 34, a menu key 36, a microphone 38, an initiate call key 40 and an end call key 42. The trackball 30 can be inwardly depressed as a means to provide additional user-input for user-selection of items and options displayed on the LCD display 24, for example. The housing 22 is made from a suitable material as will occur to those skilled in the art and can be stored, for example, in a holster (not shown) that includes an attachment for attaching to a user's belt.

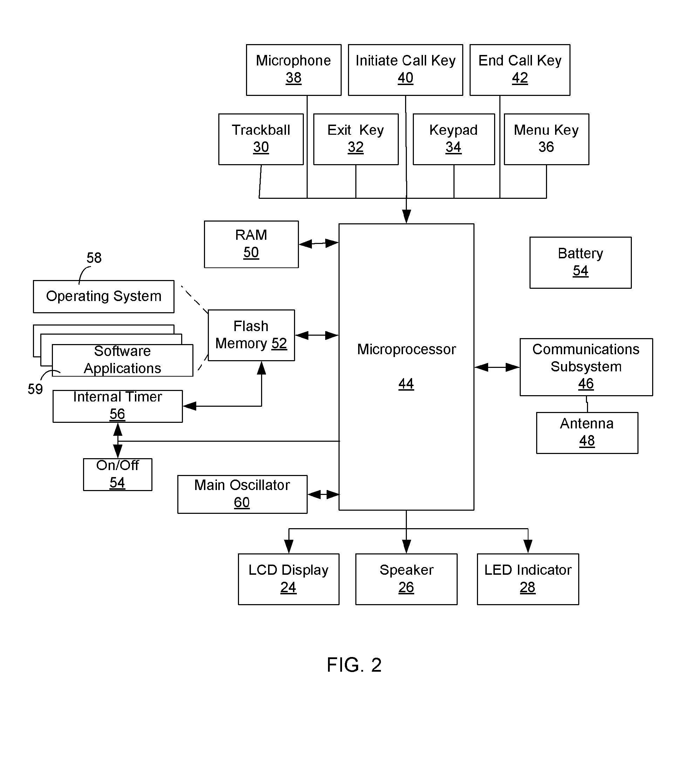

Referring now to Figure 2, a block diagram of certain components, including certain internal components within the portable electronic device 20, is shown. The portable electronic device 20 is based on a microcomputer that includes a microprocessor 44 (also referred to as a processor) connected to a random access memory unit (RAM) 50 and a persistent storage device 52 that is responsible for various non-volatile storage functions of the portable electronic device 20. Operating system software executable by the microprocessor 44 is stored in the persistent storage device 52, which in the present embodiment is flash memory. It will be appreciated, however, that the operating system software can be stored in other types of memory such as read-only memory (ROM). The microprocessor 44 receives input from various input devices including the trackball 30, the exit key 32, the keypad 34, the menu key 36, the microphone 38, the initiate call key 40, and the end call key 42, and outputs to various output devices including the LCD display 24, the speaker 26 and the LED indicator 28. The microprocessor 44 also interacts with on/off circuitry 54 for powering up the portable electronic device 20 and powering down the portable electronic device 20, and an internal timer 56.

In the present embodiment, the portable electronic device 20 is a two-way RF communication device having voice and data communication capabilities. The portable electronic device 20 also includes Internet communication capabilities. Two-way RF communication is facilitated by a communications subsystem 46 that is used to connect to and operate with a data-only network such as Mobitex or DataTAC, or a complex voice and data network such as a GSM/GPRS, CDMA, EDGE, UMTS or CDMA2000 network, via the antenna 48.

As indicated above, the flash memory 52 stores the operating system software 58 and a plurality of software applications 59 executable by the microprocessor 44 that enable the portable electronic device 20 to perform certain operations including the communication operations referred to above. Applications software is provided including, for example, PIM applications such as an electronic mail (Messages) application, an Address Book application, a Tasks application, and a Calendar application, as well as other applications such as a Web Browser application and a Profiles application.

In a data communication mode, a received signal such as a text message or Web page download is processed by the communications subsystem 46 and input to the microprocessor 38 for further processing of the received signal for output to the LCD display 24. A user of the portable electronic device 20 can also compose data items within a software application such as a message application using the keypad 34, for example, in conjunction with the trackball 30 and the LCD display 24. Such composed items can then be transmitted over a communications network through the communications subsystem 46 and antenna 48.

Although not shown, a short-range communications subsystem can also be provided for communication between the portable electronic device 20 and other devices or systems. Such short-range communications subsystems include, for example, an infrared device as well as associated components and circuitry, and a Bluetooth^{™} communication system.

A rechargeable battery 54 such as a Li-ion battery is provided for powering the portable electronic device 20.

The user can power down the portable electronic device 20 to a power-off or low-power state by pressing a power on/off button (not shown). Alternatively, the device can be powered up or powered down using a combination of buttons that activate the on/off circuitry 54. As indicated above, the portable electronic device 20 includes an internal timer 56 that can also deliver an interrupt on an interrupt line to power up the portable electronic device 20 when the portable electronic device 20 is in a power-down state and to power down the device when the portable electronic device 20 is in the power-up state. The internal timer 56 is responsible for keeping track of the date and time when the portable electronic device 20 is turned off. A main oscillator 60 is also provided for generating a relatively high-frequency (MHz) clock signal compared to that generated by the oscillator that is part of the internal timer 56 (tens of kHz). The main oscillator 60 includes circuitry that operates when the portable electronic device is on for providing a clock signal to the microprocessor 44 and other components.

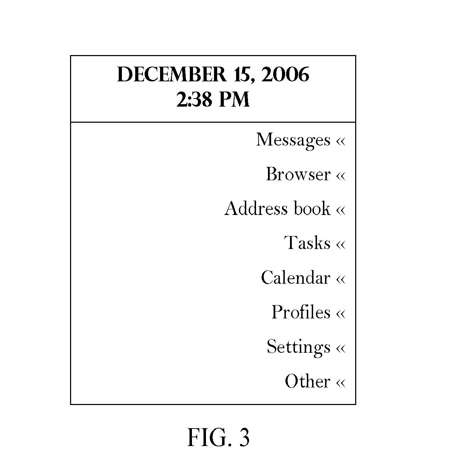

Referring to Figure 3, there is shown an exemplary menu screen that is displayed on the LCD display 24 of the portable electronic device 20. The exemplary menu screen includes a display clock that is updated according to the main oscillator 60, and a list of applications including a Messages application (such as an email application), a Web browser, an Address book, a Tasks application, and a Calendar application. Each of the displayed applications in the list is selectable by, for example, scrolling to the desired application using the trackball 30 and depressing the trackball 30.

Messages such as email messages are received on the electronic device 20 through the communications network (not shown), that wirelessly connects to the electronic device 20 via the communications subsystem 46 through the antenna 48. Each email message that is received includes a variety of information including a date of receipt, time of receipt and sender email information. In order to compose or view an email message, the Messages application is selected by scrolling using the trackball 30 and depressing the trackball 30 which causes the execution of the Messages application by the microprocessor 44.

It will also be appreciated that the Calendar application is used for displaying and storing calendared events such as appointments, lectures, exams, movies, meetings, performances, dinners, ceremonies, etc., when executed by the microprocessor 44. Each calendared event includes a variety of information including a date and time of the event. Selection of the Calendar application causes execution of the Calendar application by the microprocessor 44 and a user-selected one or default one of the calendar views is displayed on the LCD display 24. Visual representations of the calendar events are then provided in the calendar view displayed on the LCD display. The calendar views can include, for example, a month view, a week view, a day view and an agenda view.

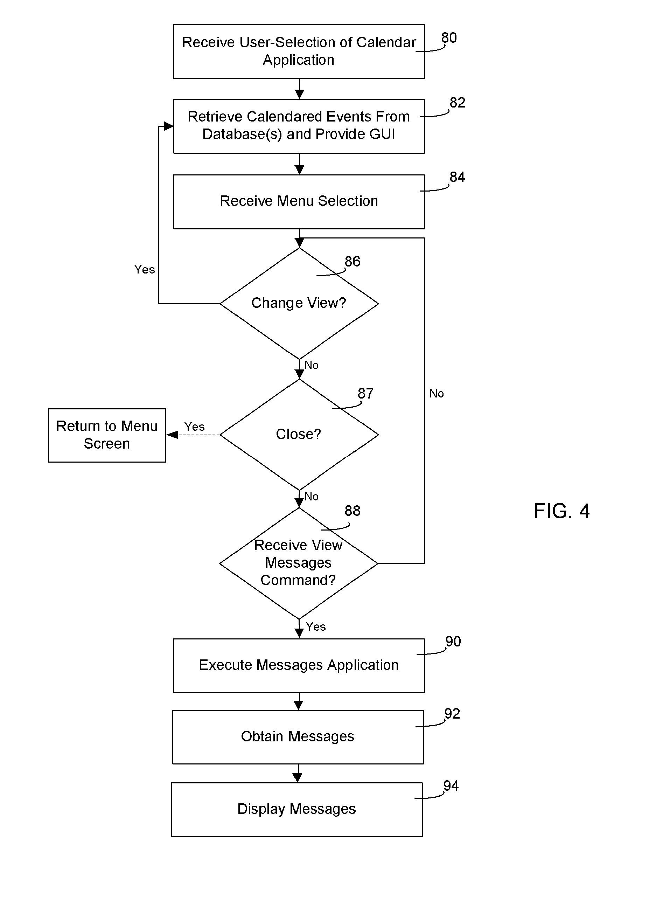

Reference is now made to Figure 4 to describe an embodiment of the present application. It will be appreciated that each of the steps of Figure 4 is carried out by routines or subroutines of the calendar software and the Messages software executed by the microprocessor 44. Coding of software for carrying out such steps is well within the scope of a person of ordinary skill in the art.

Upon user-selection of the Calendar application from the exemplary menu screen shown in Figure 3, the user-selection is received at the microprocessor 44 (step 80) and the Calendar application is executed by the microprocessor. The calendar events that have a start or an end time that falls within a set of time constraints that depend on the default calendar view are retrieved and displayed in the calendar Graphical User Interface (GUI), also referred to herein as a calendar view (step 82). The time constraints can be, for example, the beginning and ending of a current date when the calendar view is a day view. The user of the portable electronic device 20 depresses the menu key 36 to cause the microprocessor to provide a submenu list of options (step 84). The microprocessor 44 receives a user-selected option from the submenu and determines the next step based on the selection. The flowchart of Figure 4 is simplified for the purpose of the present explanation and thus, many decisions further to those shown in Figure 4 are possible depending on the submenu list of options provided. In the simplified flowchart of Figure 4, if a change in the calendar view is selected from the submenu list of options, the selection is determined (step 86) and the process returns to step 82 and calendar events are again retrieved for display in the calendar GUI. If a close option is selected, the selection is determined (step 87) and the Calendar application is closed, returning to the menu screen of Figure 3. If, however, the user selects the view messages option, a view messages command is received along with an associated time period at the microprocessor 44 (step 88). The Messages application is executed (step 90) and the microprocessor 44 retrieves all of the messages sent and messages received during the time period associated with the view messages command (step 92). The messages are then provided in a message list (step 94).

Figure 4 will now be further described with reference to particular examples that are provided for explanatory purposes and are not intended to limit the scope of the present application.

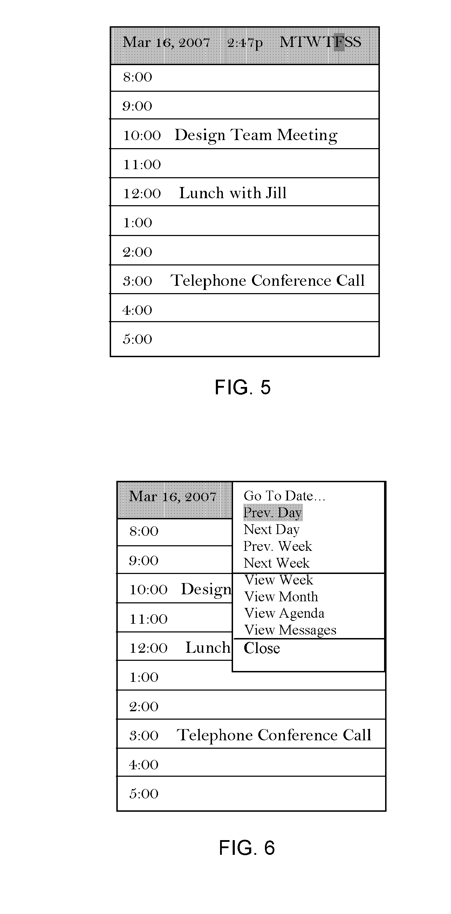

Upon selection of the Calendar application from the exemplary menu screen shown in Figure 3, the microprocessor 44 receives the user-selection at step 80 and executes the Calendar application. For the purpose of the present example, the calendar default view is the day view. It will be appreciated, however that the default view can be any view and can be changed by user selection of a new default view. Also, the view can be changed from any other view to the day view by user selection of a day view option in a calendar options submenu as will be described below. Thus, upon execution of the Calendar application, calendar events that fall within time constraints defined by the default view, are retrieved and displayed in a calendar GUI, such as that shown in Figure 5 (step 82). Since the default view is the day view, the day that is current according to the main oscillator 60 is the default view and all calendar events that fall within the default view are displayed.

In Figure 5, three calendar events are shown, including a "Departmental Meeting" from 10:00 a.m. to 11:00 a.m., "Lunch with Jill" from 12:00 p.m. to 1:00 p.m., and a "Telephone Conference Call" from 3:00 p.m. to 4:00 p.m.

Within the calendar view, receipt of the menu key 36 selection at step 84 results in the display of a submenu on the LCD display 24, providing different options for user selection, including, for example, Go To Date, Prev Day, Next Day, Prev Week, Next Week, View Week, View Month, View Agenda, View Messages, and Close, as shown in Figure 6. Selection of the Go To Date option provides a user-editable date field for the user to specify a date for displaying on the LCD display 24. Selection of the Prev Day option results in the display of the schedule for the day prior to that displayed in Figure 5. Similarly, selection of the Next Day option results in the display of the schedule for the day following that displayed in Figure 5. Selection of the Prev Week option results in the display of the schedule for the week prior to the day displayed in Figure 5. Selection of the Next Week option results in the display of the schedule for the week following the day displayed in Figure 5. Selection of the View Week option results in the display of the weekly schedule for the week including the day displayed in Figure 5. Selection of the View Month option results in the display of the monthly schedule for the month including the day displayed in Figure 5. Selection of the View Messages option is discussed further below. Selection of the Close option closes the Calendar application. It will be appreciated that the list of options shown in Figure 6 is provided for exemplary purposes and other options can be provided such as New, Open and Delete options for composition of a new calendar event for addition to the calendar display, for opening to view the details of a calendar event, and for deleting a calendar event, respectively.

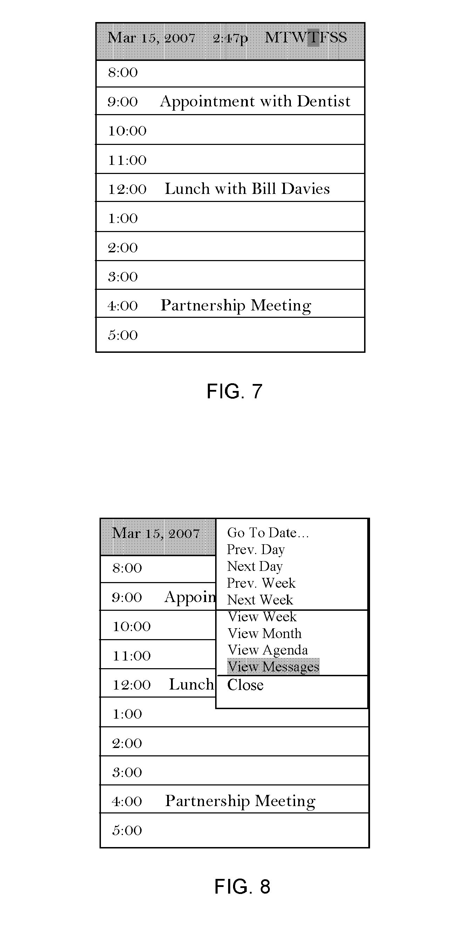

For the purpose of the present example, the calendar day view is changed by user-selection of Prev Day option (step 86), resulting in the display of the calendar schedule for the day prior to that displayed in Figure 5. Thus, the calendar day displayed on the LCD display 24 is changed from March 16, 2007, as shown in Figure 5 to March 15, 2007, as shown in Figure 7. Again, calendar events that fall within time constraints defined by the calendar view are retrieved and displayed in the calendar GUI, as shown in Figure 7 (step 82). Since the day view for the previous day is selected, all calendar events that fall within the previous day are retrieved and displayed. In the exemplary screen shown in Figure 7, three calendar events are shown, including an "Appointment with Dentist" from 9:00 a.m. to 10:00 a.m., "Lunch with Bill Davies" from 12:00 p.m. to 1:00 p.m., and a "Partnership Meeting" from 4:00 p.m. to 5:00 p.m.

Receipt of the menu key 36 selection at step 84 results in the display of the calendar submenu on the LCD display 24 as shown in Figure 8, providing the options as described above with reference to Figure 5.

A view messages command is received at the microprocessor 44 upon user-selection of the View Messages option at step 88. The view messages command is associated with a time period which, in the present example, is the day displayed in the calendar GUI at the time of selection of the View Messages option. Thus, the view messages command is associated with the full day of March 15, 2007.

Upon receipt of the view messages command at the microprocessor 44, the Messages application is executed (step 90) and the microprocessor 44 retrieves all of the messages sent and messages received during the time period associated with the view messages command (step 92). Thus, in the present example, the microprocessor retrieves all of the messages sent and messages received during the one day period of March 15, 2007.

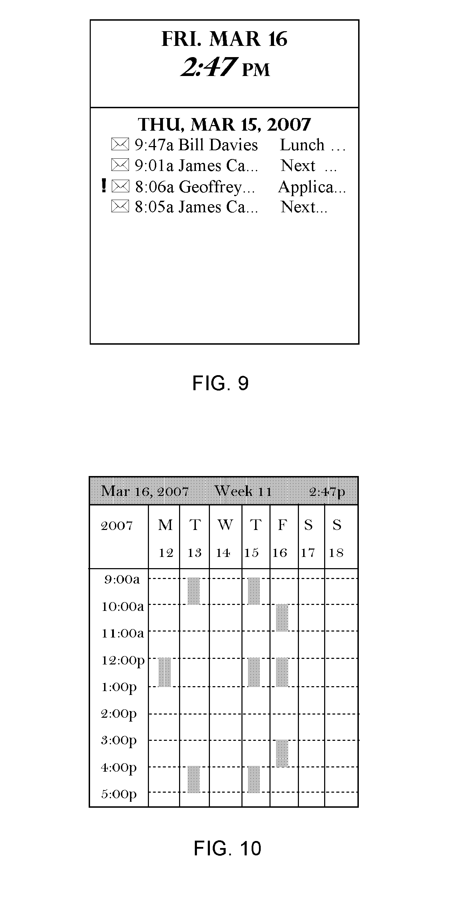

The messages are then provided in a message list (step 94), as shown in Figure 9. Thus, receipt of the view messages command causes execution of the Messages application and the display of messages based on the time period associated with the view messages command. In the present example, all the messages sent and received on March 15, 2007 are displayed in the message list at step 94. Thus, all messages that meet the time constraints that define the date of March 15, 2007, are displayed in the message list at step 94.

In the Exemplary screen shown in Figure 9, four messages were sent and received March 15, 2007.

Continued reference is made to Figure 4 to describe another example according to the present embodiment. As described above, the microprocessor 44 receives the user-selection of the Calendar application from the exemplary menu screen shown in Figure 3 and executes the Calendar application (Step 80). In the present example, the default view is the week view and therefore, upon execution of the Calendar application, calendar events that fall within time constraints defined by the week that is current according to the main oscillator 60, are retrieved and displayed in a calendar Graphical User Interface (GUI), as shown in Figure 10.

It will be appreciated that if the default view is the day view, the week view shown in Figure 10 is user-selectable by selection of the View Week option from the submenu shown in Figure 6.

In the exemplary screen shown in Figure 10, several calendar events are shown including one from 12:00 p.m. to 1:00 p.m. Monday, March 12, one from 9:00 a.m. to 10:00 a.m. and one from 4:00 p.m. to 5:00 p.m. Tuesday March 13, no calendar events on Wednesday March 14, three calendar events on Thursday March 15 and three calendar events on Friday March 16.

Within the calendar view, receipt of the menu key 36 selection at step 84 results in the display of the calendar submenu on the LCD display 24, providing different options for user selection, including, for example, Go To Date, Prev Week, Next Week, View Day, View Month, View Agenda, View Messages, and Close, as shown in Figure 6.

For exemplary purposes, the calendar day view is not changed at step 86 and the view messages command is received at the microprocessor 44 upon user-selection of the View Messages option at step 88. As indicated above, the view messages command is associated with a time period. In the present example, the time period is the week displayed in the Calendar GUI at the time of selection of the View Messages option. Thus, the view messages command is associated with the full week period of March 12, 2007 to March 18, 2007.

Upon receipt of the view messages command at the microprocessor 44, the Messages application is executed (step 90) and the microprocessor 44 retrieves all of the messages sent and messages received during the time period associated with the view messages command (step 92). Thus, in the present example, the microprocessor retrieves all of the messages sent and messages received during the week of March 12, 2007 to March 18, 2007.

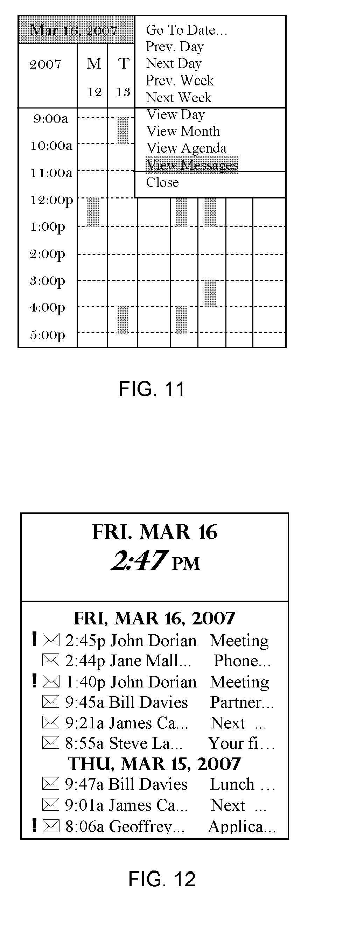

The messages are then provided in a message list (step 94), as shown in Figure 12. Thus, receipt of the view messages command causes execution of the Messages application and the display of those messages based on the period of time associated with the view messages command.

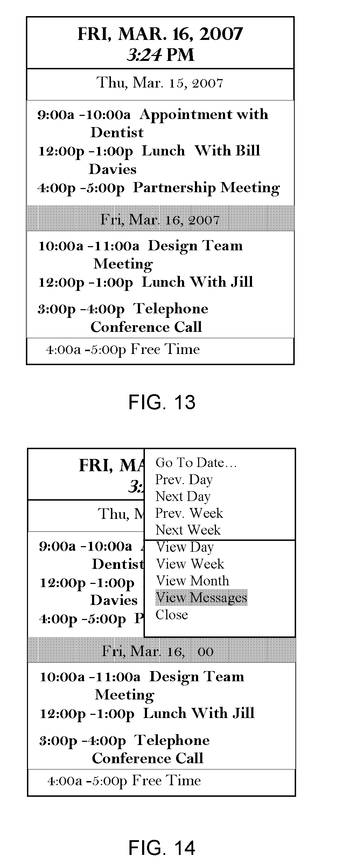

Reference is again made to Figure 4 to describe yet another example according to the present embodiment. As described above, the microprocessor 44 receives the user-selection of the Calendar application from the exemplary menu screen shown in Figure 3 and executes the Calendar application (Step 80). In the present example, the default view is the agenda view and therefore, upon execution of the Calendar application, calendar events that fall within time constraints defined by a period of time surrounding the current day according to the main oscillator 60, are retrieved and displayed in a calendar Graphical User Interface (GUI), as shown in Figure 13 (step 82). For example, the time constraints can include the week prior to the current day and the week following the current day such that all calendar events that fall within the period beginning one week prior to the current day and ending one week after the current day, are retrieved and displayed.

It will be appreciated that if the default view is any view other than the agenda view shown in Figure 13, the agenda view is user-selectable by selection of the View Agenda option from the calendar submenu shown in Figure 14 (steps 84 and 86).

In the exemplary screen shown in Figure 13, several calendar events are shown in the form of a list. The list is manipulatable by the user by scrolling forward in time to view further future events or backward in time to view past events using the trackball. In the present example, the user scrolls backward in time to view the events from Thursday March, 15, 2007. As shown, three calendar events are listed for Thursday March 15, 2007 and three calendar events and one free time period is shown for Friday March 16, 2007. Only present and future free time periods are shown and thus, past free time periods are not displayed.

Within the agenda view, receipt of the menu key 36 selection at step 84 results in the display of a submenu on the LCD display 24, providing different options for user selection, including, for example, Go To Date, Prev Day, Next Day, View Day, View Week, View Month, View Messages, and Close, as shown in Figure 13.

For exemplary purposes, the calendar day view is not changed at step 86 and the view messages command is received at the microprocessor 44 upon user-selection of the View Messages option at step 88. As indicated above, the view messages command is associated with a time period. In the present example, the time period is the day that is highlighted by user-scrolling in the agenda view of the Calendar GUI prior to user-depression of the menu key 36 resulting in receipt of the menu key 36 selection at step 84. Thus, the view messages command is associated with the highlighted day of March 15, 2007. Alternatively, the user can open a calendar event to view the details of that calendar event and can select a View Messages option from a submenu in the calendar event view. The time period in this case is the day during which the calendar event is scheduled.

Upon receipt of the view messages command at the microprocessor 44, the Messages application is executed (step 90) and the microprocessor 44 retrieves all of the messages sent and messages received during the time period associated with the view messages command (step 92). Thus, in the present example, the microprocessor retrieves all of the messages sent and messages received on March 15, 2007.

The messages are then provided in a message list (step 94), as shown in Figure 9. Thus, receipt of the view messages command causes execution of the Messages application and the display of those messages based on the period of time associated with the view messages command.

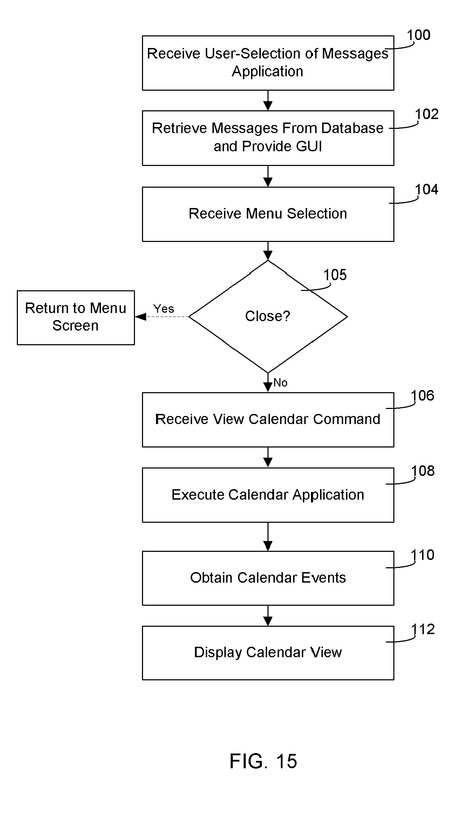

Reference is now made to Figure 15 to describe another embodiment of the present application. It will be appreciated that each of the steps of Figure 15 is carried out by routines or subroutines of the calendar software and the Messages software executed by the microprocessor 44. Coding of software for carrying out such steps is well within the scope of a person of ordinary skill in the art.

Upon user-selection of the Messages application from the exemplary menu screen shown in Figure 3, the user-selection is received at the microprocessor 44 (step 100) and the Messages application is executed. The messages stored in a messages database are retrieved and displayed in the messages GUI (step 102). The messages GUI is manipulated by user scrolling using the trackball 30. The user of the portable electronic device 20 depresses the menu key 36 and upon receipt of the menu key 36 selection at the microprocessor 44, a messages submenu list of options is provided (step 104). The microprocessor 44 receives a user-selected option from the submenu and determines the next step based on the selection. If a close option is selected, the selection is determined (step 105) and the Messages application is closed, returning to the menu screen of Figure 3. If, however, the user selects the view calendar option, a view calendar command is received along with an associated time period at the microprocessor 44 (step 106). The flowchart of Figure 15 is simplified for the purpose of the present explanation and thus, decisions that are not shown in Figure 15 are possible based on the submenu list of options provided. The Calendar application is executed (step 108) and the microprocessor 44 retrieves all of the calendar events that have a start time or an end time or both a start time and an end time during the time period associated with the view calendar command (step 110). A calendar view showing the scheduled calendar events is then provided (step 112).

Figure 15 is further described herein with reference to a particular example that is provided for explanatory purposes and is not intended to limit the scope of the present application.

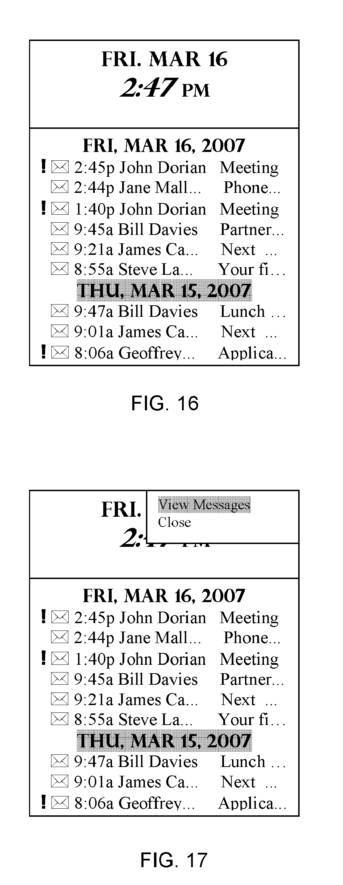

Upon selection of the Messages application from the exemplary menu screen shown in Figure 3, the microprocessor 44 receives the user-selection at step 100 and executes the Messages application. Upon execution of the Messages application, messages sent from and received at the portable electronic device 20 are retrieved and displayed in a time-ordered list including date headings indicating the date of receipt or date of sending of the messages, such as the list shown in Figure 16 (Step 102). The list is manipulatable by user-scrolling using the trackwheel 30 to view further past messages. The user then scrolls to any one of the date headings in the list to highlight the date heading.

Within the messages view, receipt of the menu key 36 selection (step 104) results in the display of a messages submenu on the LCD display 24, providing different options for user selection, including, for example, the options shown in Figure 17, such as View Calendar and Close, as shown in Figure 17. It will be appreciated that further options can be provided in the messages submenu.

A view calendar command is received at the microprocessor 44 upon user-selection of the View Calendar option at step 106. The view calendar command is associated with a time period which is defined by the date heading highlighted in the message list. Thus, the time period is the one day period on which the highlighted date falls. In the present example, the highlighted date heading is March 15, 2007. Alternatively, the user can open a message in the message list and can select a view calendar option from a submenu in the message view. The time period in this case is the day during which the calendar event is scheduled.

Upon receipt of the view calendar command at the microprocessor 44, the Calendar application is executed (step 108) and the microprocessor 44 retrieves all of the stored calendar events that have a start time, and end time, or both a start and an end time that falls in the one day time period (step 110). Thus, in the present example, the microprocessor retrieves all of the calendar events with a start time or an end time or a start and an end time that falls on March 15, 2007.

The calendar day view is then displayed for March 15, 2007 (step 112), thereby providing the day view shown in Figure 7. Thus, receipt of the view calendar command causes execution of the Calendar application and the display of calendar events based on the period of time associated with the view calendar command.

In the examples described above with reference to Figure 4, all messages sent and messages received are retrieved at step 92 and displayed at step 94. It will be appreciated that the sent messages and received messages can be separate and thus, selection of the option to view messages can result in the display of only received messages, for example. Alternatively, separate options can be provided to view sent messages, view received messages or view all messages.

In the example described above with reference to Figure 4 and to Figures 10 to 12, receipt of the view messages command at the microprocessor 44 at step 88 results in the display of all messages sent and received in the one week period defined by the week view. It is possible that messages from only a particular highlighted day are retrieved and displayed. Thus, user scrolling to a particular day results in the selection of a one day period defined by the beginning and ending of the highlighted day such that selection of the View Messages option from the calendar submenu shown in Figure 11 results in the view messages command being received at the microprocessor 44, associated with the one day period defined by the highlighted day in the week view. Alternatively, options can be provided to view messages for the week and to view messages for the day.

In the Example described above with reference to Figure 4 and to Figures 13 and 14, a date is highlighted form the agenda view by user scrolling to the date prior to pressing the menu key 36. Alternatively, the user can scroll to any message in the agenda view, rather than scrolling to the date heading. The view messages command can be associated with the day during which the start time or end time of the calendar event occurs.

Further still, it is contemplated that a View Messages option can be provided in a submenu in the month view. The resulting view messages command can be associated with the full one-month period, with a one-week period defined by user-scrolling to highlight a day within the week or, with a one-day period defined by user-scrolling to highlight a day within the month view. Alternatively, options to view messages for the month, view messages for the week and/or view messages for the day can be provided.

In the Example described above with reference to Figures 15 to 17, the view calendar command is associated with a one-day period defined by user-scrolling to a date heading in the message list. Alternatively, the view calendar command can be associated with a one-day period defined by user-scrolling to any message in the message list. Thus, the date on which the message is received or sent defines the one-day period.

While the embodiments described herein are directed to particular implementations of the electronic device and method of controlling the electronic device, it will be understood that modifications and variations to these embodiments are within the scope and sphere of the present application. For example, many of the options provided in the submenus and the displayed details in the screens shown in the Figures are provided for exemplary purposes and such options and details can vary. As described above, the user can open a calendar event to view the details of that calendar event and can select a view messages option from a submenu in the calendar event view. The time period in this case is the day during which the calendar event is scheduled. The messages can also be listed in order with the messages sent or received closest to the calendar event time (such as the end time) listed first. Alternatively, the messages sent or received closest to the calendar event time can be highlighted or marked in some manner. Also, rather than displaying only messages from the specific time period based on the calendar view when the view messages command is selected, a list of all messages can be provided with the messages sent and received during the specific time period shown at the top of the display thereby identifying those messages for the user.

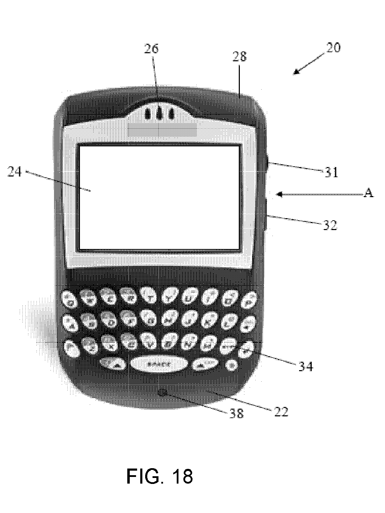

It will be appreciated that the portable electronic device of Figure 1 is shown for exemplary purposes only. Other portable electronic devices such as that shown in Figure 18 are possible. Referring to Figure 18, another exemplary portable electronic device 20 is shown. The portable electronic device 20 includes a housing 22 that frames an LCD display 24. In the present example, however, the portable electronic device 20 includes a trackwheel 31, rather than a trackball. The trackwheel can be pressed inwardly in the direction of arrow "A" as a means to provide additional user-input. The microprocessor 38 receives input from the trackwheel 31 which is used for user selection of features from a list or a table on the LCD display 24 of the portable electronic device 20. Selection is carried out by rolling the trackwheel to roll a cursor (or highlighted region), for example, to the desired selection and pressing inwardly in the direction of arrow "A". The portable electronic device 20 shown in Figure 18 includes many other features, including, for example, a speaker 26, an LED indicator 28, an exit key 32, a key pad 34, a microphone 38 and other features similar to those described above with reference to Figure 1. It will also be appreciated that reference is made to a trackball in the above description for exemplary purposes only, and a trackwheel 31 such as that shown in Figure 18 can be used.

Many other modifications and variations may occur to those skilled in the art. All such modifications and variations are believed to be within the sphere and scope of the present application.

## Claims

1. A method of controlling an electronic device, the method comprising:
executing a calendar application or a message application and providing a respective calendar user interface or a messaging user interface;
receiving a view command from a user input of the electronic device in said calendar user interface or said messaging user interface, said view command relating to a time period;
executing the other of the calendar application or the message application in response to receipt of the view command; and
displaying a respective calendar application view or a message application view based on said time period.

2. The method according to claim 1, further comprising receiving a command to exit said calendar application view or said message application view and returning to said calendar user interface or said messaging user interface.

3. The method according to claim 1 or claim 2, wherein executing a calendar application or a message application and providing a respective calendar user interface or a messaging user interface comprises executing the calendar application and providing the calendar user interface, receiving comprises receiving an electronic message view command relating to a calendar time period in the calendar user interface, said executing the other of the calendar application or the message application comprises executing the message application, and displaying comprises displaying a list of ones of electronic messages that meet a set of time constraints based on the calendar time period.

4. The method according to claim 3, wherein receiving an electronic message view command comprises receiving a selection of a day or a week in the calendar user interface, and said message view command relates to said day or said week.

5. The method according to claim 4, wherein receiving an electronic message view command comprises receiving a user-selectable option to view electronic mail from a selected day or a user-selectable option to view electronic mail from a week including the selected day.

6. The method according to claim 4 or claim 5, wherein displaying a list of ones of the electronic messages comprises displaying ones of the electronic messages received between a start and an end of said said day or said week.

7. The method according to claim 6, wherein displaying a list of ones of the electronic messages comprises displaying ones of the electronic messages sent between a start and an end of said day or said week.

8. The method according to claim 1 or claim 2, wherein executing a calendar application or a message application and providing a respective calendar user interface or a messaging user interface comprises executing the message application and providing the messaging user interface, receiving comprises receiving a calendar view command relating to a time period that includes a time of an electronic message from said messaging user interface, executing comprises executing the calendar application, and displaying comprises displaying a calendar view including said time period.

9. The method according to claim 8, wherein receiving a calendar view command comprises receiving a selection of said electronic message.

10. The method according to claim 9, wherein receiving a calendar view command comprises receiving a user-selectable option to view a day that includes the time of the electronic message or a user-selectable option to view a week that includes the time of the electronic message.

11. The method according to claim 8, wherein receiving a calendar view command comprises receiving a selection of a date from an electronic message list.

12. The method according to claim 11, wherein receiving a calendar view command comprises receiving a user-selectable option to view a day in the calendar view that corresponds to the date or a user-selectable option to view a week that includes the date.

13. An electronic device having a calendar application and email capability, the electronic device comprising:
a display device;
a user input device; and
a processor connected to said display device and said user input device, said processor operable to cause said electronic device to perform the steps of the method of any one of claims 1 to 12.

14. A computer program product for controlling an electronic device, said computer program product comprising a computer-readable medium having computer-readable code embodied therein for implementing in an electronic device the method of any one of claims 1 to 12.

## Amended claims

### Amended claims in accordance with Rule 137(2) EPC.

**1.** A method of controlling an electronic device (20), the method comprising:
executing one of a calendar application and a message application and providing (82,102) a respective one of a calendar user interface and a messaging user interface;
receiving (88, 106) a view command from a user input (30, 36) of the electronic device (20) in said one of said calendar user interface and said messaging user interface, said view command relating to a time period;
executing (90, 108) the other of said calendar application and said message application in response to receipt of the view command and displaying (112, 94) a respective one of a calendar application view showing only calendar events and a message application view showing only messages, based on said time period.

**2.** The method according to claim 1, further comprising receiving a command to exit said one of said calendar application view and said message application view and returning to said one of said calendar user interface and said messaging user interface.

**3.** The method according to claim 1 or claim 2, wherein executing said one of a calendar application and a message application and providing (82,102) a respective one of a calendar user interface and a messaging user interface comprises executing the calendar application and providing (82) the calendar user interface, and wherein said receiving (88, 106) comprises receiving (88) an electronic message view command relating to a calendar time period in the calendar user interface, wherein said executing (90, 108) the other of said calendar application or message application comprises executing (90) the message application, and wherein said displaying (112, 94) comprises displaying (94) a list of ones of electronic messages that meet a set of time constraints based on the calendar time period.

**4.** The method according to claim 3, wherein receiving (88) an electronic message view command comprises receiving a selection of a day or a week in the calendar user interface, and said message view command relates to said day or said week.

**5.** The method according to claim 4, wherein receiving (88) an electronic message view command comprises receiving a user-selectable option to view electronic mail from a selected day or a user-selectable option to view electronic mail from a week including the selected day.

**6.** The method according to claim 4 or claim 5, wherein displaying a list of ones of the electronic messages comprises displaying ones of the electronic messages received between a start and an end of said day or said week.

**7.** The method according to claim 6, wherein displaying a list of ones of the electronic messages comprises displaying ones of the electronic messages sent between a start and an end of said day or said week.

**8.** The method according to claim 1 or claim 2, wherein said executing the other of said calendar application and said message application and providing (82, 102) a respective calendar user interface or a messaging user interface comprises executing the message application and providing (102) the messaging user interface, wherein said receiving (88, 106) comprises receiving (106) a calendar view command relating to a time period that includes a time of an electronic message from said messaging user interface, wherein said executing (90, 108) comprises executing (108) the calendar application, and wherein said displaying (112, 94) comprises displaying (112) a calendar view including said time period.

**9.** The method according to claim 8, wherein receiving (106) a calendar view command comprises receiving a selection of said electronic message.

**10.** The method according to claim 9, wherein receiving (106) a calendar view command comprises receiving a user-selectable option to view a day that includes the time of the electronic message or a user-selectable option to view a week that includes the time of the electronic message.

**11.** The method according to claim 8, wherein receiving (106) a calendar view command comprises receiving a selection of a date from an electronic message list.

**12.** The method according to claim 11, wherein receiving (106) a calendar view command comprises receiving a user-selectable option to view a day in the calendar view that corresponds to the date or a user-selectable option to view a week that includes the date.

**13.** An electronic device (20) having a calendar application and email capability, the electronic device comprising:
a display device (24);
a user input device (30, 34); and
a processor (44) connected to said display device (24) and said user input device (30, 34), said processor (44) operable to cause said electronic device (20) to perform the steps of the method of any one of claims 1 to 12.

**14.** A computer program product for controlling an electronic device (20), said computer program product comprising a computer-readable medium having computer-readable code embodied therein for implementing in an electronic device (20) the method of any one of claims 1 to 12.
